# FASCICULE DE BREVET EUROPEEN

(11) **EP 0 543 690 B1**
(45) Date de publication et mention de la délivrance du brevet: **05.03.1997**
(21) Numéro de dépôt: 92402911.9
(22) Date de dépôt: 27.10.1992
(51) Int. Cl.: G11B 5/60

(54) **Patin de vol pour enregistrememt magnétique**
Gleitkörper für magnetische Aufzeichnung
Slide for magnetic recording

(30) Priorité: 30.10.1991 FR 9113424
(43) Date de publication de la demande: 26.05.1993
(73) Titulaire: COMMISSARIAT A L'ENERGIE ATOMIQUE, 75015 Paris (FR)
(72) Inventeur: Barrois, Gérard, F-38120 Le Fontanil (FR); Dominiak, Marcel, F-38000 Grenoble (FR); Fedeli, Jean-Marc, F-38140 Beaucroissant (FR); Pisella, Christian, F-38140 Beaucroissant (FR)
(74) Mandataire: Dubois-Chabert, Guy

(56) Documents cités:
- EP-A- 0 262 655
- EP-A- 0 361 658
- PATENT ABSTRACTS OF JAPAN vol. 13, no. 460 (P-946)(3808) 18 Octobre 1989 & JP- A-11 79 216
- IBM TECHNICAL DISCLOSURE BULLETIN. vol. 26, no. 11, Avril 1984, ARMONK US pages 6195 - 6196 M.K. HILL ET AL. 'DUAL GAP HEAD'
- RESEARCH DISCLOSURE no. 321, Janvier 1991, EMSWORTH GB page 45 , XP000163471 "Magnetic Head with Arrow-Shaped Air Bearing Surface"
- PATENT ABSTRACTS OF JAPAN vol. 10, no. 111 (P-451)(2168) 25 Avril 1986 & JP-A- 60 242 548
- PATENT ABSTRACTS OF JAPAN vol. 1, no. 124 (E-055)(5268) 18 Octobre 1977 & JP-A- 52 056 917
- IBM TECHNICAL DISCLOSURE BULLETIN. vol. 34, no. 4B, Septembre 1991, NEW YORK US pages 158 - 160 , XP000189561 'SLDERS WITH WELL-DEFINED UNDULATION PATTERNS ON THE ABS FOR IMPROVED STICTION AND FLYABILITY'
- Tribology and Mechanics of Magnetic Storage Devices, B.Bhushan, Springer-Verlag New York Inc., 1990, page 33

## Description

### Domaine technique

La présente invention a pour objet un patin de vol. Elle trouve une application dans la lecture et/ou l'écriture d'informations sur un support magnétique.

### Etat de la technique antérieure

Les dispositifs d'enregistrement magnétique comprennent, de manière très générale, un support d'enregistrement (disque, bande, etc.) et un moyen de lecture et/ou d'écriture constitué d'un patin de vol.

Un patin de vol peut comprendre un ou plusieurs rails en relief. Le patin peut être ainsi monorail, ou à deux rails (selon une structure dite en catamaran) ou à trois rails (selon une structure dite en trimaran).

Ces rails (ou seulement certains de ces rails) sont munis d'une tête de lecture et/ou d'écriture. La surface des rails est tournée vers le support d'enregistrement et subit la pression de l'air lorsque le support est en rotation. C'est cette pression qui assure le "vol" du patin au-dessus du support.

Chaque rail en relief peut supporter une tête magnétique sur la tranche arrière. Ces têtes magnétiques sont soit déposées en couches minces, soit rapportées par collage. La longueur du patin se trouve en général déterminée par l'épaisseur du matériau dans lequel est réalisé le support qui est par exemple en alumine ou ferrite et le façonnage est effectué mécaniquement.

La figure 1 montre ainsi une plaquette 10 sur laquelle sont déposées des têtes en couches minces 24, 25.

La figure 2 montre un patin 20, dans le cas d'une structure en catamaran, avec ses deux rails en relief 21 et 22 et ses deux têtes 24, 25. Des chanfreins 26, 27 sont pratiqués à l'avant de chaque rail en relief, pour permettre le décollage du patin lorsque le support magnétique atteint une certaine vitesse de rotation. Cette technique du chanfrein est toujours utilisée pour les patins de vol de type catamaran qui ne sont pas réalisés en silicium.

Les modes et les temps d'accès à une piste d'enregistrement ayant évolué rapidement dans le passé il a fallu prévoir des dispositifs s'accomodant d'accélération de plus en plus rapide. Dans le cas de disque, le patin ne se trouve plus alors dans une position parallèle à la piste pour tous les diamètres du disque. Il peut présenter un angle positif ou négatif suivant le rayon de la piste utilisée.

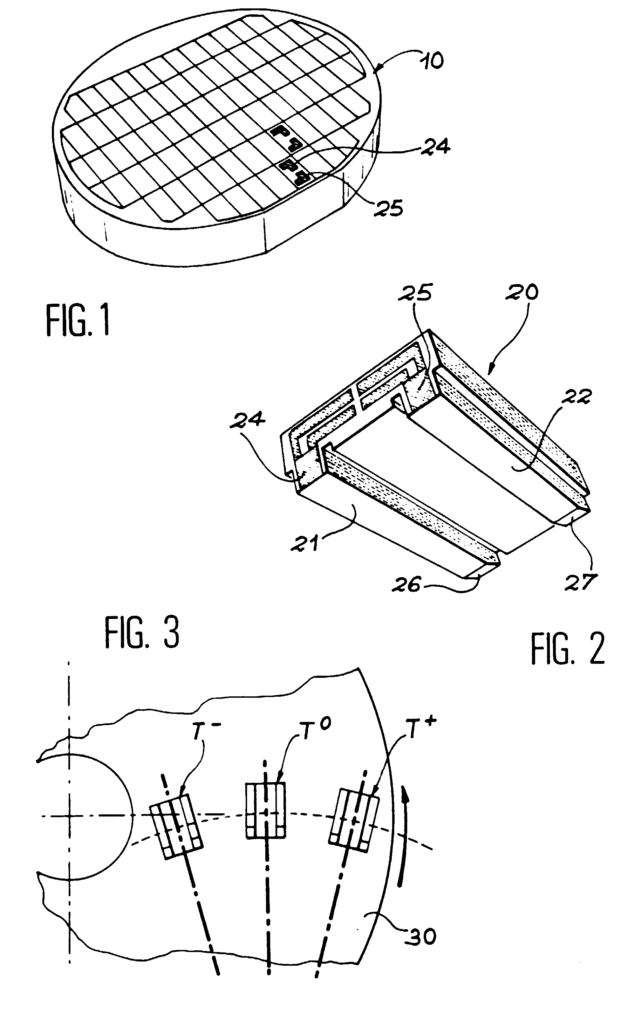

C'est ce que représente la figure 3 où l'on voit un disque dur 30 avec une tête T placée dans trois positions différentes T⁻, T^{o}, T⁺ par rapport à la direction tangentielle de la piste. L'existence d'un décalage angulaire entre l'axe longitudinal du patin et la direction de la piste va provoquer un basculement latéral du patin autour du point de maintien du patin (point pivot). Ce décalage angulaire va également provoquer des variations de hauteur de vol.

Pour remédier à cet inconvénient, les rails peuvent être chanfreinés sur les côtés, le long de l'axe longitudinal.

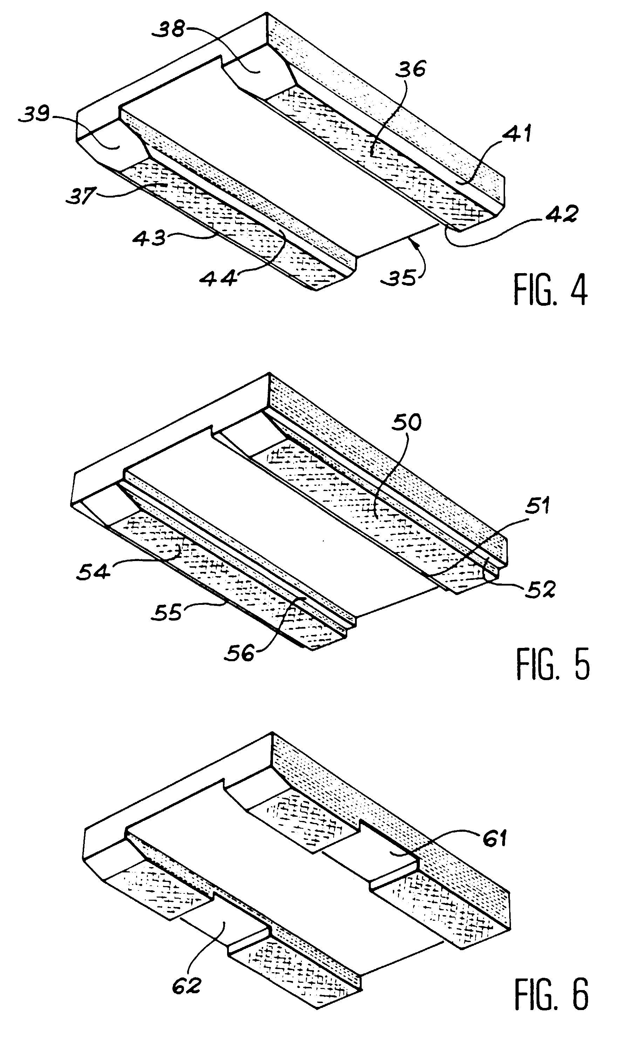

La figure 4 montre ainsi un patin 35 de type catamaran avec deux rails 36 et 37, leurs chanfreins avant 38, 39 ainsi que leurs chanfreins latéraux, respectivement 41, 42 pour le rail 36 et 43, 44 pour le rail 37.

Ce type de patin est décrit dans le document US-A-4 673 996.

Une variante de cette technique est représentée figure 5 où les chanfreins longitudinaux ont été remplacés par des décrochements longitudinaux référencés 51, 52 pour le rail 50 et 55, 56 pour le rail 54.

Cette technique, dite du TPC ("Transverse Pressure Contour"), est décrite dans le document US-A-4 870 519. Elle confère une stabilité de la hauteur de vol pour des rayons d'écriture et/ou de lecture différents. Mais elle ne vise pas à résoudre les problèmes des écarts de hauteur de vol en fonction de l'augmentation de la vitesse dans le cas où il n'y a pas, dans le même temps, déplacement angulaire. Par ailleurs, elle nécessite toujours la réalisation de chanfreins sur le bord avant des reliefs.

On connaît également des patins de vol dans lesquels une rainure a été pratiquée transversalement dans chaque relief, comme illustré sur la figure 6 où ces rainures portent les références 61, 62.

Un tel patin est décrit dans l'article de G. CLIFFORD et D. HENZE intitulé "An Air Bearing Minimizing the Effects of Slider Skew Angle" dans "IEEE Transactions on Magnetics", vol. 25, n° 5, Sept. 1989.

Par ailleurs, il existe des patins de vol pouvant être réalisés dans du silicium. De tels patins sont illustrés dans le brevet US-A-4 698 708. Les têtes magnétiques associées à ces patins sont disposées sur les faces inférieures des patins et portent de ce fait, la dénomination de "têtes planaires". Pour améliorer le décollage et l'atterrissage de ces patins, ces derniers peuvent comporter, en face avant des reliefs, des décrochements comme décrit dans le document FR-A-2 629 247.

Le document IBM Technical Disclosure Bulletin, vol. 26, n°11, décrit un patin de vol avec deux rails reliés à l'avant par une pièce transversale. Les têtes de lecture sont disposées verticalement sur la face arrière du patin.

Le document 2244 Research Disclosure 2 (1991), January, n°321, Emsworth, GB décrit un motif en forme de flèche avec deux rails latéraux convergents et un rail central. Le transducteur de lecture est placé encore sur la face arrière du patin, derrière le rail central.

L'abrégé du brevet japonais d'Avril 25, 1986, vol. 10, n°111 (P-451) (2168) correspondant à la demande 60-242548, décrit un patin de vol avec deux rails à décrochements longitudinaux.

La demande EP-A-0 262 655 décrit un patin de vol avec un relief en forme de cylindre dont le pourtour est muni d'un chanfrein. La tête de lecture est placée à l'arrière du patin.

Si ces dispositifs sont satisfaisants à certains égards, ils présentent encore des inconvénients car les contraintes de fonctionnement deviennent de plus en plus sévères. Aujourd'hui, les conditions de vol d'un patin doivent être parfaitement maîtrisées non seulement pour des angles nuls, mais aussi pour des angles positifs ou négatifs pouvant aller jusqu'à 20 degrés. Par ailleurs, l'accès très rapide avec reconnaissance de pistes exige une grande stabilité du patin. De plus, les temps de contact doivent être réduits au minimum pour assurer la longévité du couple tête-support. Enfin, les faibles hauteurs de vol rencontrées (de l'ordre du 1/10^{ème} de micron) doivent subir de faibles variations, pour des vitesses qui vont jusqu'à 15 m/s.

### Exposé de l'invention

La présente invention a justement pour but de remédier aux inconvénients de l'état de la technique et de proposer un patin de vol avec têtes planaires qui permet d'obtenir ces hautes performances. A cette fin, elle préconise de réaliser, à l'arrière du rail en relief, un décrochement. Ce décrochement va stabiliser la partie arrière du rail.

On peut rappeler, à cet égard, que, pour les têtes classiques non planaires, l'élément magnétique se trouvant sur le flanc arrière du relief, l'accès à la surface à l'arrière des reliefs est impossible. En revanche, pour les têtes planaires en particulier sur silicium, les éléments magnétiques sont à environ 500 µm de l'arrière sur les faces des reliefs en regard du support. On a donc intérêt, d'une part, à mettre en retrait la surface arrière du relief pour ne pas avoir un point plus bas que la tête magnétique par rapport au support, et d'autre part, à utiliser cette surface arrière en retrait pour créer une dépression. Cette dépression augmente avec la vitesse et permet de limiter la variation de la hauteur de vol. Cette dépression contribue également à la détermination de l'inclinaison pendant le vol. Le Demandeur a obtenu de bons résultats pour des variations importantes de la vitesse linéaire (la tête étant toujours tangentielle à la piste). Pour une variation de la vitesse conjointement avec une variation d'angle, le retrait de la surface arrière améliore la stabilité du vol. A titre d'exemple, une gravure de largeur selon l'axe y de 40 à 500 µm peut être réalisée à l'arrière sur une profondeur selon l'axe z de 0,2 à 4 µm.

Un patin de vol selon l'invention est défini à la revendication 1.

L'invention s'applique à toute forme de patin : monorail, catamaran, trimaran. Si le patin comporte plusieurs rails en relief, l'un au moins de ces rails comporte à l'arrière un décrochement. Mais plusieurs rails, voire tous les rails, peuvent comporter ce décrochement arrière.

La disposition de l'invention selon laquelle il existe un décrochement à l'arrière du rail peut se combiner avec des dispositions connues comme la présence de chanfreins ou de décrochements longitudinaux (TPC) et/ou de chanfrein ou de décrochement à l'avant. On peut en particulier prévoir un décrochement sur la totalité de la périphérie du rail. Dans ce cas, chaque décrochement sur les côtés longitudinaux et sur l'avant coopère avec le décrochement arrière pour remplir certaines fonctions :
- les surfaces dégagées sur les côtés longitudinaux des reliefs permettent d'éviter le basculement latéral du patin autour de son point de pivot, ainsi que les variations de hauteur de vol lorsque la direction du patin fait un angle avec la piste ; en modifiant les longueurs selon un axe x de ces surfaces de chaque côté longitudinal du relief, on peut obtenir, en cas de vol avec angle par rapport à la piste, une dépression qui augmente avec la vitesse et avec l'angle, ce qui permet de limiter l'élévation de la hauteur de vol selon un axe z ; le Demandeur a observé que pour des longueurs de 40 à 500 µm et des profondeurs de 0,2 à 4 µm, on obtenait une bonne stabilité dans les déplacements latéraux selon l'axe x, et une variation de la hauteur de vol de la tête ne dépassant pas 20 nm ; mais cette bonne qualité dans les déplacements ne sera obtenue que pour des profondeurs selon l'axe z de 0,2 à 4 µm ;
- la surface dégagée à l'avant du relief détermine le décollage et l'atterrissage du patin et l'inclinaison pendant le vol ; la longueur selon l'axe y de cette zone avant est de l'ordre de 40 à 500 µm et la profondeur selon un axe z du décrochement de 0,2 à 4 µm et de préférence entre 0,7 et 2 µm.

### Brève description des dessins

- la figure 1 montre une plaquette avec diverses têtes en couches minces,
- la figure 2 montre un patin de vol avec têtes sur les flancs arrière du patin,
- la figure 3 illustre l'angle fait par un patin avec la piste, en fonction du rayon de celle-ci,
- la figure 4 illustre un patin avec chanfreins avant et chanfreins latéraux,
- la figure 5 illustre un patin avec chanfreins avant et décrochements latéraux,
- la figure 6 montre un patin avec chanfreins avant et rainures transversales,

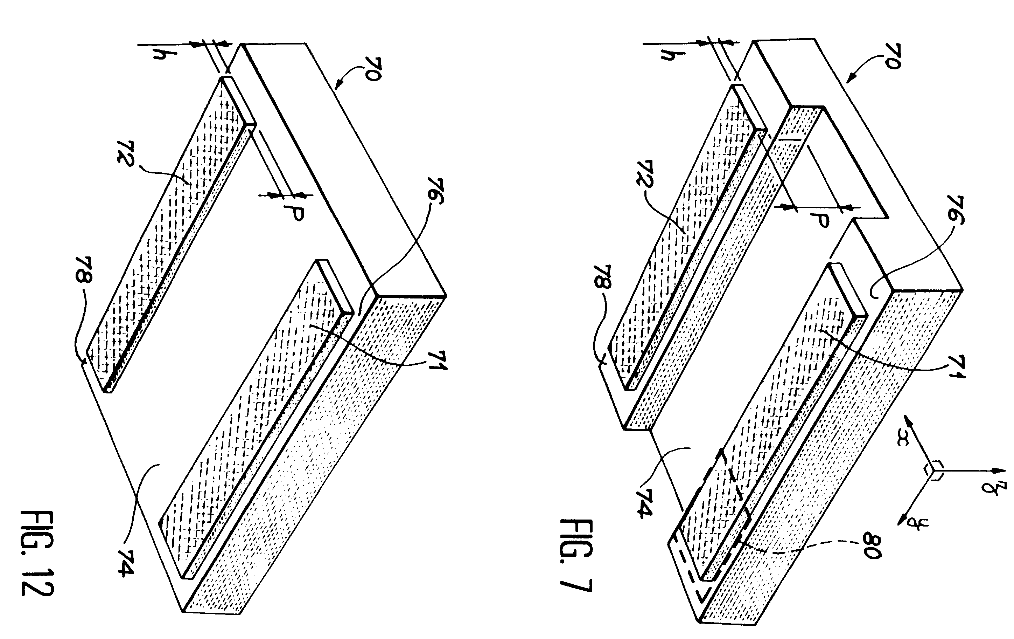

- la figure 7 montre un patin de vol selon l'invention, avec décrochement périphérique autour des reliefs,

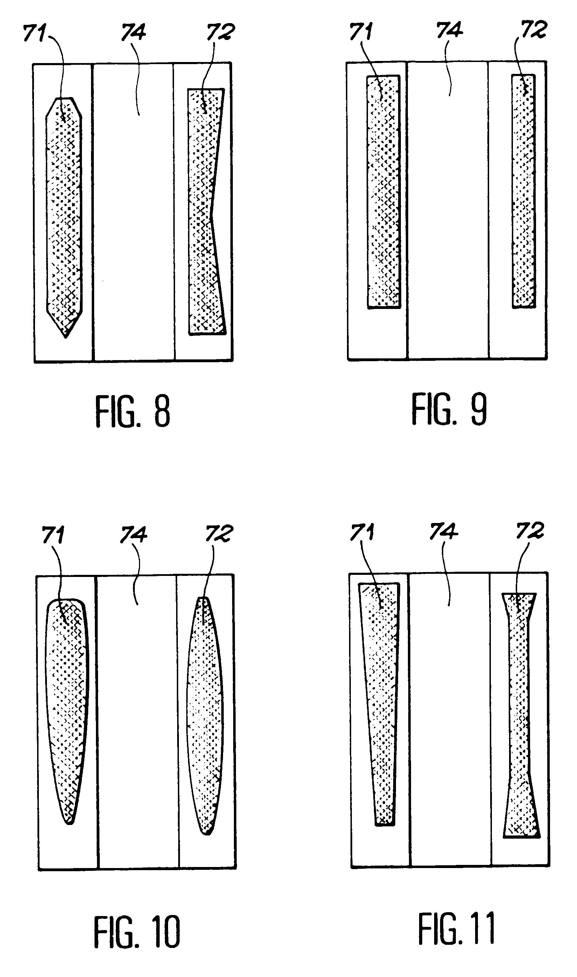

- les figures 8, 9, 10 et 11 montrent quatre modes de réalisation du patin selon l'invention,

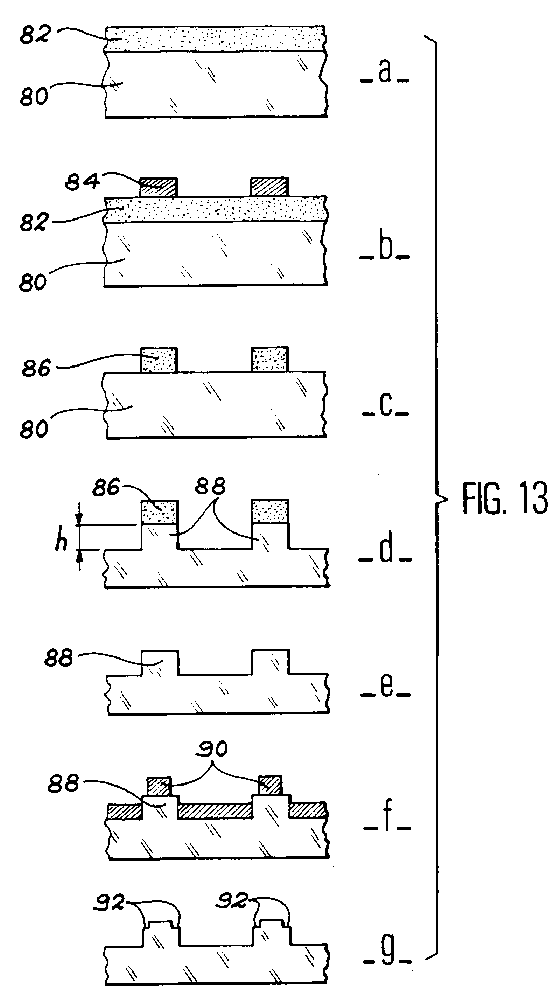

- la figure 12 montre un cas particulier où l'évidement central a comme profondeur la hauteur du décrochement périphérique,
- la figure 13 illustre un mode particulier de réalisation du patin selon l'invention,

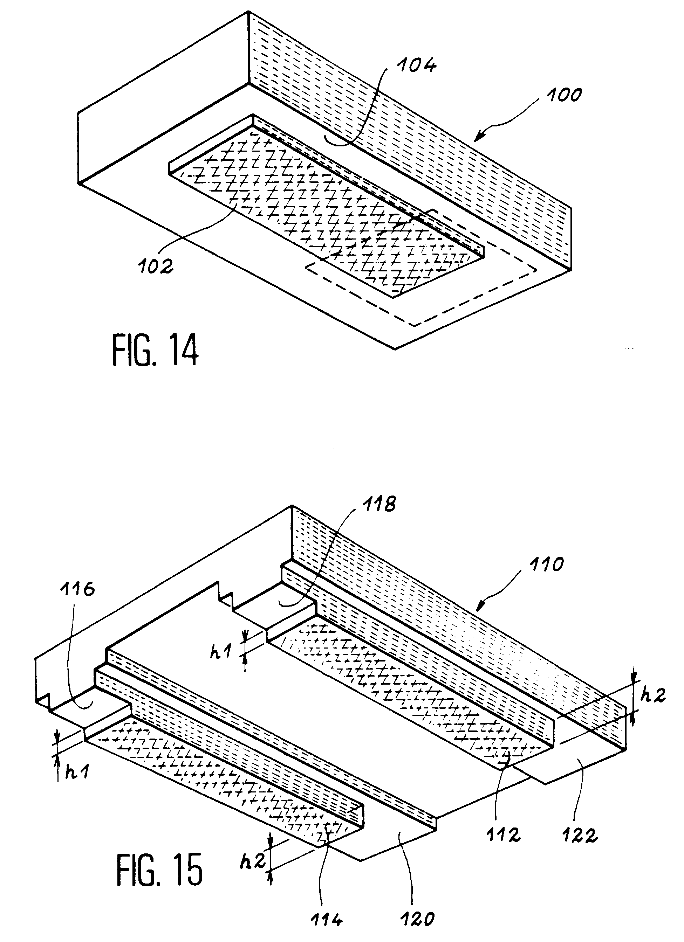

- la figure 14 montre un patin de vol monorail avec un décrochement périphérique de hauteur constante,
- la figure 15 montre un patin de vol de type catamaran avec des décrochements de hauteurs différentes,

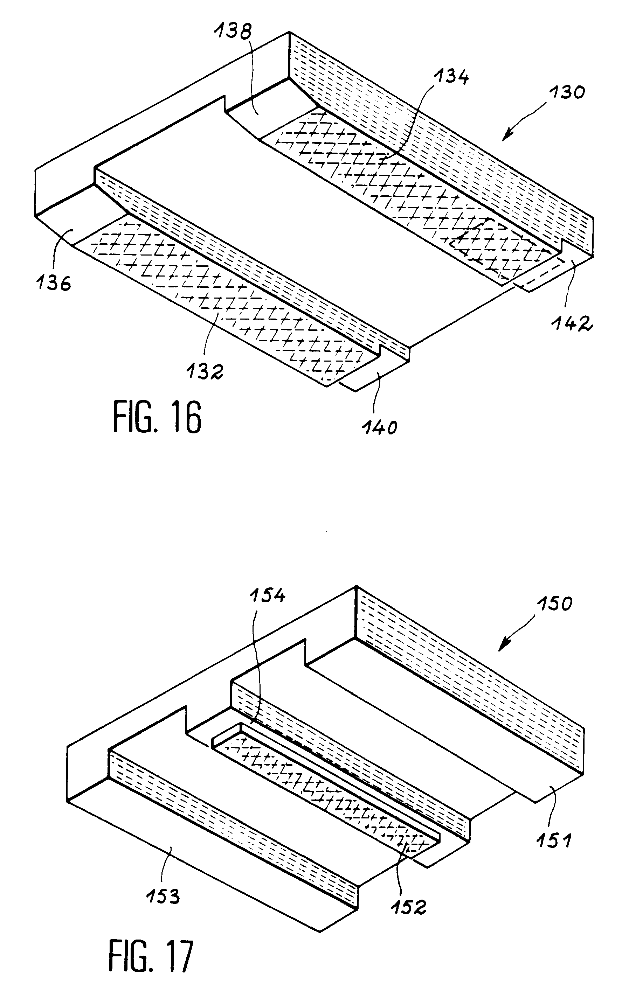

- la figure 16 montre un patin de vol de type catamaran avec décrochements à l'arrière et chanfreins à l'avant,
- la figure 17 montre un patin de vol de type trimaran avec décrochement arrière sur l'un seulement des rails.

### Exposé détaillé de modes de réalisation

Sur la figure 7, le patin de vol représenté porte la référence générale 70. Ce patin, en forme de catamaran, comprend deux rails en relief 71 et 72 séparés par un évidement 74. Autour de chaque relief 71, 72, on trouve un décrochement, respectivement 76, 78, de profondeur selon l'axe z constante sur toute la périphérie des reliefs. Sur la figure 7, on voit que l'évidement central présente selon l'axe z une profondeur P et les décrochements une hauteur h selon l'axe z.

La figure 7 indique également sous la référence 80 et en tireté, la position de la tête magnétique de lecture et/ou d'écriture. Une tête magnétique peut être disposée sur un seul des reliefs ou respectivement sur chaque relief.

Les figures 8, 9, 10 et 11 montrent différents modes de réalisation du patin de l'invention, dans lesquels les reliefs 71 et 72 ont des formes diverses, notamment arrondies (figure 10) et où les décrochements sont assymétriques (figures 8, 9, 10, 11).

Ces différentes formes permettent, en fonction des conditions d'utilisation, de contrôler les dépressions ou les pressions à l'avant, à l'arrière et sur les côtés du patin, de façon à obtenir une optimisation de sa stabilité en vol.

Dans les patins de vol connus, l'évidement entre les reliefs est de l'ordre de 70 µm à 100 µm de profondeur selon l'axe z. Le Demandeur a observé que les caractéristiques du vol ne sont pas modifiées pour des profondeurs réduites à environ 15 µm. Pour des valeurs inférieures, plus particulèrement entre 2 µm et 10 µm, cet évidement va provoquer une dépression lors des vols angulaires par rapport à la piste. Cette dépression va permettre également de contrôler la hauteur de vol du relief comportant la tête d'écriture-lecture.

L'invention porte donc aussi sur un patin de vol dans lequel les reliefs sont séparés par un évidement de profondeur P inférieure à 15 µm. Pour certaines applications, la valeur de la profondeur P de l'évidement entre les reliefs peut être identique à la hauteur h du décrochement ménagé à la périphérie des reliefs selon l'invention. Alors, le patin ne comportera qu'une seule surface en retrait par rapport aux faces inférieures des reliefs.

C'est ce qui est représenté sur la figure 12 où l'évidement est référencé 74 et les décrochements respectivement 76 et 78. La profondeur commune (P, h) peut être de l'ordre de quelques microns (par exemple 2 µm).

Des profondeurs aussi faibles sont possibles notamment dans le mode de fabrication par gravure collective qui permet d'obtenir une précision suffisante.

Le patin de vol qui vient d'être décrit peut être réalisé par des opérations de photogravure diverses. A titre d'exemple non limitatif, la figure 13 illustre un procédé comprenant les opérations suivantes :
a) sur une plaquette 80 (par exemple en silicium), on dépose une résine photosensible 82 (partie a) ;
b) on effectue ensuite une insolation de cette résine à travers un masque définissant la surface à graver (partie b) ;
c) après insolation, on effectue une révélation de la résine insolée pour dégager les parties à graver (reliefs en résine 86) (partie c) ;
d) on effectue ensuite une gravure ionique réactive du silicium pour réaliser les reliefs 88 ; cette opération est réalisée en contrôlant la profondeur (h) ;
e) on enlève la résine par un procédé chimique ; on obtient ainsi les reliefs 88 ;
f) par des opérations analogues, on forme un masque en résine 90 sur le sommet des reliefs 88 (partie f), et éventuellement au fond de l'évidement pour définir les décrochements à paver ;
g) on grave la périphérie des reliefs pour former les décrochements 92 (partie g) de profondeur comprise entre 0,2 et 4 µm (de préférence entre 0,7 et 2 µm).

Lorsque P = h, un seul masque 84 de forme appropriée suffit pour définir à la fois les reliefs et les décrochements (l'évidement étant confondu avec les décrochements).

La figure 14 montre une variante de l'invention correspondant à un patin de vol 100 comportant un seul rail 102 avec un décrochement périphérique 104 de hauteur constante.

La figure 15 montre encore une autre variante correspondant à un patin de vol de type catamaran 110 avec deux rails 112, 114 avec décrochements périphériques. Mais les décrochements à l'avant 116, 118 ont des hauteurs différentes des décrochements à l'arrière 120, 122 et sur les bords. A l'avant, la hauteur h1 peut être de 0,5 µm alors qu'à l'arrière la hauteur h2 peut être de 3 µm.

De même, on peut réaliser une tête de ce type avec des décrochements latéraux de hauteur différente de celle du décrochement arrière.

La figure 16 montre encore une autre variante dans laquelle le patin de vol 130 comprend deux rails 132, 134 avec chanfreins à l'avant 136, 138 et deux décrochements à l'arrière 140, 142.

Enfin, la figure 17 montre un patin de vol 150 de type trimaran, avec trois rails 151, 152, 153 dont seul le rail central 152 comprend un décrochement périphérique 154.

## Revendications

1. Patin de vol pour enregistrement magnétique, comprenant au moins un rail (21, 22, 36, 37, 50, 54, 71, 72, 102, 112, 114, 132, 134, 151, 152, 153) avec une partie avant située du côté du bord d'attaque du rail et une partie arrière située du côté du bord de fuite du rail, le patin étant muni de moyens (80) de lecture et/ou d'écriture, ce patin comprenant au moins un rail (71, 72, 102, 112, 114, 132, 134, 152) présentant au moins sur sa partie arrière un déchrochement (78, 104, 120, 122, 140, 142, 154), et ce patin étant caractérisé en ce que les moyens de lecture et/ou d'écriture sont constitués par au moins une tête planaire disposée sur l'arrière d'au moins un rail comprenant ledit décrochement.

2. Patin de vol selon la revendication 1, caractérisé par le fait qu'il comprend un seul rail (102), ce rail présentant au moins à l'arrière un décrochement.

3. Patin de vol selon la revendication 1, caractérisé par le fait qu'il comprend deux rails en relief (71, 72, 112, 114, 132, 134) l'un au moins de ces rails présentant à l'arrière un décrochement (78, 120, 122, 140, 142).

4. Patin de vol selon la revendication 1, caractérisé par le fait qu'il comprend trois rails (151, 152, 153), l'un au moins de ces rails (152) présentant à l'arrière un décrochement (154).

5. Patin de vol selon l'une quelconque des revendications 1 à 4, caractérisé par le fait que chaque rail qui comporte un décrochement à l'arrière (140, 142) comporte un chanfrein à l'avant (136, 138).

6. Patin de vol selon l'une quelconque des revendications 1 à 4, caractérisé par le fait que chaque rail qui comporte un décrochement à l'arrière (120, 122) en comporte également un à l'avant (116, 118).

7. Patin de vol selon la revendication 6, caractérisé par le fait que le décrochement à l'avant (116, 118) présente une première hauteur (h1) et le décrochement à l'arrière (120, 122) une seconde hauteur (h2), la seconde (h2) étant différente de la première (h1), ces hauteurs étant mesurées par rapport au sommet du rail possédant le décrochement en question.

8. Patin de vol selon l'une quelconque des revendications 1 à 7, caractérisé par le fait que chaque rail qui présente un décrochement à l'arrière en présente également un sur les bords latéraux (76, 78, 104, 154).

9. Patin de vol selon l'une quelconque des revendications 1 à 4, caractérisé par le fait que chaque rail (71, 72, 102, 152) présentant un décrochement à l'arrière présente ce décrochement sur la totalité de sa périphérie (76, 78, 104, 154).

10. Patin de vol selon l'une quelconque des revendications 1, 3, 4, caractérisé par le fait qu'il comprend un évidement (74) entre deux rails (71, 72, 112, 114, 132, 134, 151, 152, 153), cet évidement ayant une certaine profondeur (P) comptée à partir du sommet des rails.

11. Patin de vol selon la revendication 10, caractérisé par le fait que la profondeur (P) de l'évidement (74) est égale à la hauteur (h) du décrochement arrière (76, 78).

12. Patin de vol selon les revendications 9 et 10, caractérisé par le fait que la profondeur (P) de l'évidement (74) est égale à la hauteur (h) du décrochement à la périphérie du rail.

13. Patin de vol selon l'une quelconque des revendications 1 à 12, caractérisé par le fait que la hauteur des décrochements comptée par rapport au sommet des rails possédant ces décrochements est comprise entre 0,2 et 4 µm.

14. Patin de vol selon la revendication 13, caractérisé par le fait que la hauteur des décrochements est comprise entre 0,7 et 2 µm.

## Claims

1. Flight slider for magnetic recording comprising at least one rail (21, 22, 36, 37, 50, 54, 71, 72, 102, 112, 114, 132, 134, 151, 152, 153) with a front part and a rear part, the rear part being provided with reading and/or writing means (80), said slider comprising at least one rail (71, 72, 102, 112, 114, 132, 134, 152) having at least on its rear part an indentation (78, 104, 120, 122, 140, 142, 154), characterized in that the reading and/or writing means are constituted by at least one planar head located on the rear of at least one rail having said indentation.

2. Flight slider according to claim 1, characterized in that it has a single rail (102), said rail having at least one indentation to the rear.

3. Flight slider according to claim 1, characterized in that it has two rails in relief (71, 72, 112, 114, 132, 134) and at least one of these rails has an indentation (78, 120, 122, 140, 142) at the rear.

4. Flight slider according to claim 1, characterized in that it has three rails (151, 152, 153) and at least one of these rails (152) has an indentation (154) at the rear.

5. Flight slider according to any one of the claims 1 to 4, characterized in that each rail having an indentation at the rear (140, 142) has a chamfer at the front (136, 138).

6. Flight slider according to any one of the claims 1 to 4, characterized in that each rail having an indentation at the rear (120, 122) also has one at the front (116, 118).

7. Flight slider according to claim 6, characterized in that the indentation at the front (116, 118) has a first height (h1) and the indentation at the rear (120, 122) a second height (h2), the second (h2) differing from the first (h1), said heights being measured with respect to the apex of the rail having the indentation in question.

8. Flight slider according to any one of the claims 1 to 7, characterized in that each rail having an indentation at the rear also has one on the lateral side (76, 78, 104, 154).

9. Flight slider according to any one of the claims 1 to 4, characterized in that each rail (71, 72, 102, 152) having an indentation at the rear has said indentation on its entire periphery (76, 78, 104, 154).

10. Flight slider according to any one of the claims 1, 3 or 4, characterized in that it has a recess (74) between two rails (71, 72, 112, 114, 132, 134, 151, 152, 153), said recess having a certain depth (P) as from the apex of the rails.

11. Flight slider according to claim 10, characterized in that the depth (P) of the recess (74) is equal to the height (h) of the rear indentation (76, 78),

12. Flight slider according to claims 9 and 10, characterized in that the depth (P) of the recess (74) is equal to the height (h) of the indentation on the periphery of the rail.

13. Flight slider according to any one of the claims 1 to 12, characterized in that the height of the indentations measured from the apex of the rails having said indentations is between 0.2 and 4 µm.

14. Flight slider according to claim 13, characterized in that the height of the indentations is between 0.7 and 2 µm.

## Patentansprüche

1. Gleitkörper für magnetische Aufzeichnung, wenigstens eine Schiene umfassend (21, 22, 36, 37, 50, 54, 71, 72, 102, 112, 114, 132, 134, 151, 152, 153) mit einem auf der Seite der Schienenvorderkante befindlichen Vorderteil und einem auf der Seite der Schienenhinterkante befindlichen Hinterteil, wobei die Schiene ausgestattet ist mit Einrichtungen (80) zum Lesen und/oder Schreiben, und dieser Gleitkörper wenigstens eine Schiene (71, 72, 102, 112, 114, 132, 134, 152) umfaßt, die wenigstens an ihrem Hinterteil einen Absatz (78, 104, 120, 122, 140, 142, 154) aufweist,
**dadurch gekennzeichnet,**
daß die Lese- und/oder Schreibeinrichtungen gebildet werden durch wenigstens einen Planarkopf, angeordnet auf dem Hinterteil wenigstens einer den genannten Absatz aufweisenden Schiene.

2. Gleitkörper nach Anspruch 1, dadurch gekennzeichnet, daß er eine einzige Schiene (102) umfaßt, wobei diese Schiene wenigstens hinten einen Absatz aufweist.

3. Gleitkörper nach Anspruch 1, dadurch gekennzeichnet, daß er zwei erhabene bzw. hervorstehende Schienen aufweist (71, 72, 112, 114, 132, 134), wobei wenigstens eine dieser Schienen hinten einen Absatz (78, 120, 122, 140, 142) aufweist.

4. Gleitkörper nach Anspruch 1, dadurch gekennzeichnet, daß er drei Schienen (151, 152, 153) umfaßt, wobei wenigstens eine dieser Schienen (152) hinten einen Absatz (154) aufweist.

5. Gleitkörper nach einem der Ansprüche 1 bis 4, dadurch gekennzeichnet, daß jede Schiene, die hinten einen Absatz (140, 142) aufweist, vorn eine Abschrägung (136, 138) aufweist.

6. Gleitkörper nach einem der Ansprüche 1 bis 4, dadurch gekennzeichnet, daß jede Schiene, die hinten einen Absatz (120, 122) aufweist, einen solchen ebenfalls vorn aufweist (116, 118).

7. Gleitkörper nach Anspruch 6, dadurch gekennzeichnet, daß der Absatz vorn (116, 118) eine erste Höhe (h1) aufweist und der Absatz hinten (120, 122) eine zweite Höhe (h2), wobei die zweite Höhe (h2) anders ist als die erste (h1) und diese Höhen gemessen werden in bezug auf die Oberseite der Schiene, die den fraglichen Absatz aufweist.

8. Gleitkörper nach einem der Ansprüche 1 bis 7, dadurch gekennzeichnet, daß jede Schiene, die hinten einen Absatz aufweist, ebenfalls einen an den Seitenrändern aufweist (76, 78, 104, 154).

9. Gleitkörper nach einem der Ansprüche 1 bis 4, dadurch gekennzeichnet, daß jede Schiene (71, 72, 102, 152), die hinten einen Absatz aufweist, diesen Absatz auf der Gesamtheit ihrer Peripherie aufweist (76, 78, 104, 154).

10. Gleitkörper nach einem der Ansprüche 1, 3, 4, dadurch gekennzeichnet, daß er eine Vertiefung (74) zwischen zwei Schienen (71, 72, 112, 114, 132, 134, 151, 152, 153) umfaßt, wobei diese Vertiefung eine bestimmte, von der Oberseite der Schienen aus gemessene Tiefe (P) hat.

11. Gleitkörper nach Anspruch 10, dadurch gekennzeichnet, daß die Tiefe (P) der Vertiefung (74) gleich der Höhe (h) des hinteren Absatzes (76. 78) ist.

12. Gleitkörper nach einem der Ansprüche 9 und 10, dadurch gekennzeichnet, daß die Tiefe (P) der Vertiefung (74) gleich der Höhe (h) des Absatzes an der Peripherie der Schiene ist.

13. Gleitkörper nach einem der Ansprüche 1 bis 12, dadurch gekennzeichnet, daß die Höhe der Absätze, gemessen in bezug auf die Oberseite der diese Absätze aufweisenden Schienen enthalten ist zwischen 0,2 und 4 µm.

14. Gleitkörper nach Anspruch 13, dadurch gekennzeichnet, daß die Höhe der Absätze enthalten ist zwischen 0,7 und 2 µm.
